# EUROPEAN PATENT SPECIFICATION

(11) **EP 1 825 152 B1**
(45) Date of publication and mention of the grant of the patent: **02.04.2008**
(21) Application number: 05718380.8
(22) Date of filing: 04.04.2005
(51) Int. Cl.: F16B 11/00

(54) **A PROCESS AND MEANS FOR STABLY FIXING ANCHORING ORGANS TO SURFACES**
VERFAHREN UND MITTEL ZUR STABILEN BEFESTIGUNG VON VERANKERUNGSGLIEDERN AN FLÄCHEN
MOYENS DE FIXATION STABLE D'ORGANES D'ANCRAGE SUR DES SURFACES

(30) Priority: 16.12.2004 IT MO20040331
(43) Date of publication of application: 29.08.2007
(73) Proprietor: System S.p.A., 41042 Fiorano Modenese (MO) (IT)
(72) Inventor: STEFANI Franco, I-41049 Sassuolo (IT)
(74) Representative: Gotra, Stefano
(86) International application number: PCT/IB2005/000909
(87) International publication number: WO 2006/064312

(56) References cited:
- EP-A- 0 750 082
- DE-A- 4 141 616
- DE-A1- 10 359 466
- US-A- 3 866 873
- US-A- 4 693 652
- US-A- 5 756 185

## Description

### Technical Field

Specifically, though not exclusively, the invention is usefully applied for anchoring organs or elements which in turn are predisposed to anchor large ceramic slabs, for example, for external cladding of buildings, resulting in ventilated walls having a free hollow space (which can also be of variable entity) between the slabs and the wall of the building.

### Background Art

In the case of large slabs some of the solutions adopted have been shown to be relatively complex and not fully reliable under the aspect of safety. To prevent the use of ugly metal through-pins or hooks, in some cases cavities are made in the internal side of the slabs, not going all the way through and thus leaving the outwards-facing surface intact; rods or threaded pins are anchored in the cavities. The pins or rods are then connected to frames which are specially predisposed, and then fixed to the walls to be clad.

Apart from problems that can arise regarding reliability of the anchoring (of the rods to the slabs), all of the prior art realisations using this method exhibit a great drawback, which very severely limits their use, i.e. the presence of the threaded pins themselves, which, as they project from the internal side of the slabs, become a serious obstacle to the positioning of the slabs side-by-side, and render storage of the slabs extremely difficult, not to mention their transport and movement in general at all stages prior to laying.

The prior art also includes realisations of anchoring devices which do not include the presence of hooking or anchoring elements that project with respect to the slab surfaces.

These are, however, relatively sophisticated devices that provide an anchoring organ in two parts which are connectable by means of a fastening; a first part is fixed stably internally of the body of the slab, while a second and separate external part can be fastened on the first. These devices are relatively expensive and require special attention during application thereof.

Document US 5756185 discloses means for fixing structural components to flat surfaces comprising a bonding portion provided with an hot-melt adhesive substance. The heat produced by friction between the flat surface and the bonding surface activates the hot-melt adhesive substance.

Document EP 0750082 discloses means for anchoring a member to a surface, including an hollow cylindrically shaped anchoring member and a separate annular load engagement member, having a wedge-shaped cross section, peripherally connected to it for holding the anchoring member in its anchoring configuration.

The main aim of the present invention is to obviate the above-cited drawbacks in the prior art by providing means for stably fixing anchoring organs, at moment of use, to slab surfaces, with an extremely solid and secure anchoring.

An advantage of the invention is its constructional and functional simplicity.

A further advantage is the ease and rapidity with which it can be applied.

A further advantage is the guarantee of safety it offers against damp infiltration.

These aims and advantages and others besides are all attained by the invention, as it is characterised in the accompanying claims.

### Disclosure of Invention

Further characteristics and advantages of the present invention will better appear from the detailed description that follows of some preferred but non-exclusive embodiments of the invention, illustrated purely by way of nonlimiting example in the accompanying figures of the drawings, in which:
Figure 1 is a schematic section made according to an axial median plane before application;
Figures 2 and 3 are the same section as in figure 1, respectively in an intermediate applicational configuration and a final applicational configuration;
Figure 4 is a schematic section of an alternative embodiment made according to an axial median plane before application.

With reference to the figures of the drawings, 1 denotes in its entirety an anchoring organ predisposed to be stably anchored to a surface 2 of a slab 40 which in the preferred embodiment is constituted by a sandwich of two thin ceramic tiles 41 and 42, glued together.

In the first preferred embodiment, the anchoring organ 1 is provided with a base 10 which on one side has an active surface 11, which couples on a portion of surface 2 to which the anchoring organ 1 is to be fixed; on an opposite side, the base 10 exhibits means 14 for gripping the anchoring organ 1. The gripping can advantageously be realised by a chuck of a tool which can rotate the anchoring organ 1 on command about a median axis x-x thereof.

A predetermined quantity of glue 3 is predisposed on the active surface 11; before activation, the glue 3 is in solid form and is housed internally of the chamber defined by an internal cylindrical surface of a tract of tubular element 12 and the portion of active surface 11 delimited internally thereof.

In a first embodiment, not illustrated, the glue 3 is initially solid and of the hot-melt type, i.e. the type of glue that exhibits the property of becoming activated when melted by subjection to a mechanical action which generates a heat necessary for melting. In the embodiment, the heat is produced following the dragging of the glue 3 on the portion of surface 2 against which it is contactingly pressed at the moment of application, as will be described in more detail herein below.

In the embodiment illustrated in the figures of the drawings, the glue 3, before activation, is bi-component, the two components being separated and sealed in respective small containers in the form of blisters. These two containers are opened upon subjection to a combined mechanical action, such as the one described above, in which the anchoring organ 1 is drawn in rotation and pressed against the portion of surface 2. When subjected to this combined mechanical action the small blister containers are broken and the liquid in them (resins or catalysers) are rapidly mixed; in this way the glue is activated.

In a further embodiment, not illustrated, the glue can be predisposed directly on the portion of surface 2 of the slab 40 on which the active surface 11 of the anchoring organ 1 is to be coupled.

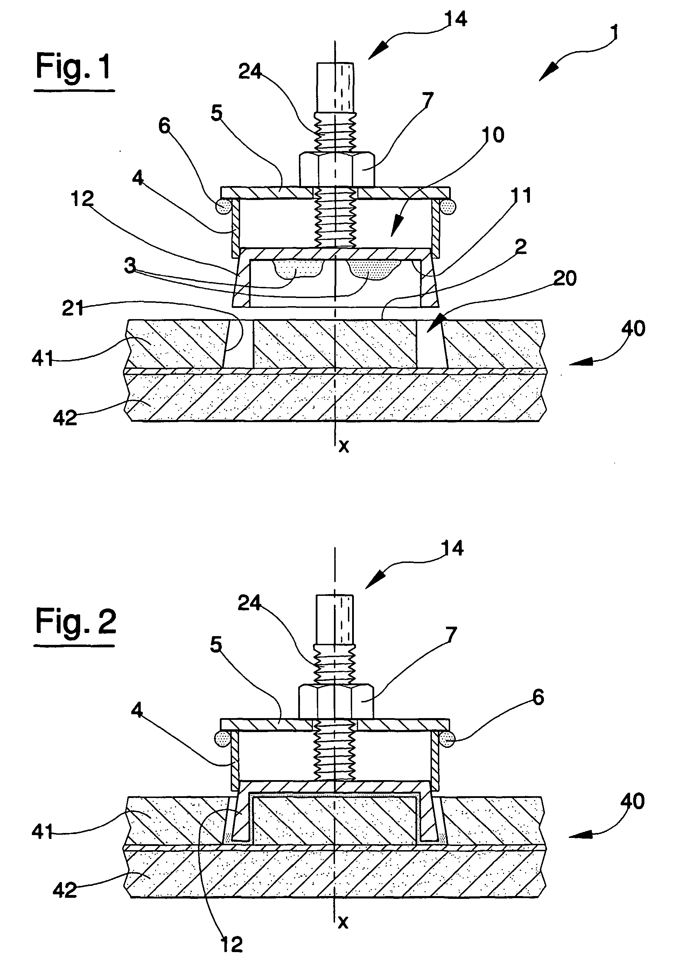

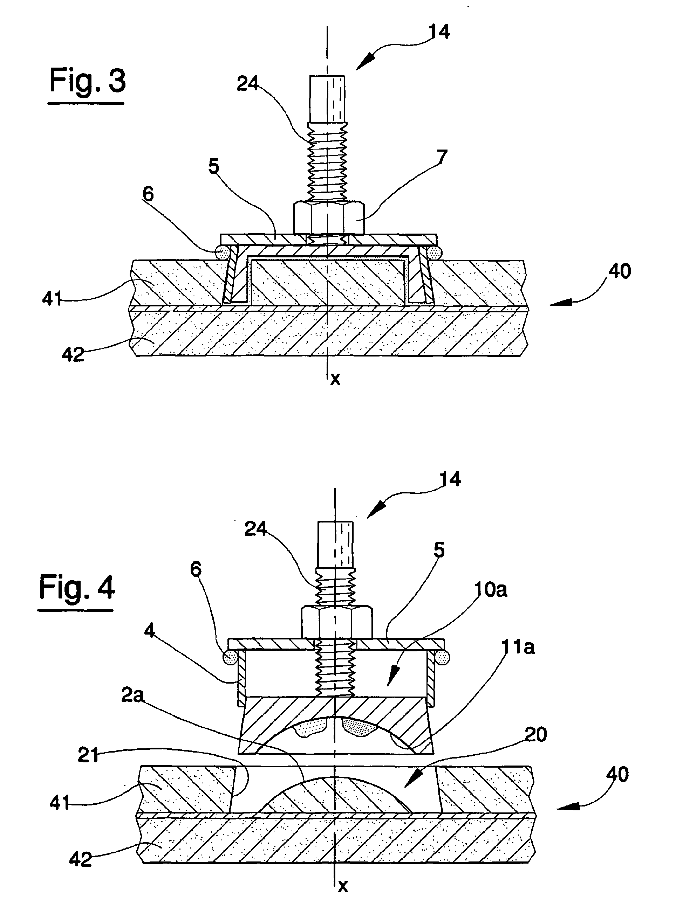

The anchoring organ 1 comprises a deformable ring 4 for coupling with an external lateral surface of the short tract of projecting tubular element 12 which is solidly constrained on the base 10 and which deformable ring 4 is in turn coupled with a predetermined amount of play, along with the projecting tubular element 12, in a corresponding crown-shaped circular hollow seating 20 afforded in the surface of the slab 40. The deformable ring 4 is fastened by a support 5, preferably disc-shaped, which is constrained to the anchoring organ 1 by means which can be activated from the outside, which means enable the movement of the deformable ring 4 from an inactive first position, in which the deformable ring 4 is not coupled or is coupled only on a small part of the external lateral surface of the short tract of projecting tubular element 12, into an active second position, in which the ring 4 is coupled on a large part of the external lateral surface of the short tract of projecting tubular element 12. More precisely, the support 5 is axially slidable along the threaded stalk 24 which constitutes the basic part of the means for gripping 14. By action of a nut 7, the support can be pushed towards the base 10 from the position represented in figure 1 up to the position represented in figure 3, so that the deformable ring 4 can be predisposed from the inactive first position into the active second position.

Before activation the glue 3 is housed internally of the chamber defined by the internal cylindrical surface of the tract of tubular element 12 and the portion of active surface 11 delimited internally thereof. The glue 3 occupies only a part of this chamber, the end of the tract of tubular element 12 being left free to enable introduction thereof into the hollow seating 20 in order to realise centring of the anchoring organ 1.

The means 14 for gripping the anchoring organ 1 enable the gripping of the anchoring organ 1 with the aim of enabling it to be drawn in rotation about a rotation axis (x-x) which is median and perpendicular to the active surface 11. In a further embodiment, not illustrated, the means 14 for gripping enable a gripping of the anchoring organ 1 with the aim of enabling a vibrating motion to draw it in motion.

The base 10 and the tubular element 12, with the relative external lateral surface, are coaxial to the rotation axis x-x with respect to which the deformable ring 4 is coaxially arranged.

In particular, the external lateral surface of the short tract of projecting tubular element 12 is truncoconical.

The hollow seating 20 in the shape of a circular crown afforded at the surface is delimited externally by a truncoconical lateral surface 21 which presents approximately the same conicity as the external lateral surface of the short tract of projecting tubular element 12. The short tract of projecting tubular element 12 and the hollow seating 20 are reciprocally dimensioned so as to be freely reciprocally insertable, so as to leave, between the external lateral surface of the short tract of projecting tubular element 12 and the truncoconical lateral surface 21 externally delimiting the hollow seating 20, a space which enables snug insertion of the deformable ring 4.

The deformable ring 4 has a cylindrical tubular shape. The hollow seating 20 is internally delimited by a portion of lateral surface which is cylindrical and coaxial to the rotation axis x-x.

A seal ring 6 is also included, housed externally of the base of the deformable ring 4 and in contact with the support 5. The seal ring 6 performs its sealing action once the application has been completed (see figure 3).

In the embodiment illustrated in figure 4 the portion of surface the anchoring organ 1 is to be fixed to is, in part, a portion of rounded surface 2a, specially afforded in the thin slab 41, which is axialsymmetric with respect to the axis of the lateral surface 21 which externally delimits the hollow seating 20. A base 10a is provided with an active surface 11a which is geometrically compatible and couplable to the rounded surface 2a.

The means for gripping 14 comprise, very simply, a threaded stalk or pin 24 which is constrained to the base 10.

The threaded stalk 24 can be removably connectable to a corresponding threaded hole made coaxially in the base 10.

The nut 7 is coupled on the same stalk 24, which nut 7 is for pushing the support 5 towards the base 10 from the position shown in figure 1, up to the position shown in figure 3, so as to move the deformable ring 4 from the first inactive position (before application) to the second active position, i.e. the working position (with the gripping organ applied to the slab 40).

Using the means described above, an anchoring organ 1 is very simply fixable to a surface 2. Once the hollow seating 20 has been made, the anchoring organ is gripped with a chuck of a tool and is neared and pressed against the slab 4 so that the projecting tubular element centrally penetrates the hollow seating 20. By effect of the mechanical action the blisters of glue are subjected to, the blisters break and the glue mixed to produce the adhesive action between the internal surface of the tubular element 12 and the corresponding delimiting surfaces 2, 2a afforded in the thin slab 41.

By acting on the nut 7 the deformable ring 4 is inserted into the free chamber comprised between the external truncoconical surface of the tubular element 12 and the truncoconical surface 21 of the hollow seating 20.

When the coupling operation is completed, see figure 3, the adhesive action is followed by a mechanical action that prevents extraction of the anchoring organ 1.

## Claims

1. Means for stably fixing anchoring organs (1) to surfaces, comprising: an anchoring organ (1) is provided with a base (10) which is provided on one side thereof with an active surface (11, 11a) for coupling with a portion of surface to which the anchoring organ (1) is to be fixed, and which is provided on another side thereof with means (14) for gripping the anchoring organ (1); the surface to which the anchoring organ (1) is to be fixed; a predetermined quantity of a glue (3) on the active surface (11, 11a) or on the portion of surface on which the active surface (11, 11a) is to be fixed, the glue (3) being activatable only following a subjection thereof to a mechanical action; **characterised in that** the means comprise a deformable ring (4) which couples on an external lateral surface of a short tract of projecting tubular element (12) which is solidly constrained to the base (10), the deformable ring (4) being destined to be coupled, with a predetermined amount of play, in a corresponding hollow seating (20) of the surface to which the anchoring organ (1) is to be fixed, which hollow seating (20) has a circular crown shape and is afforded in such a way as to be matchable with the external lateral surface of the short tract; the deformable ring (4) being fixed to a support (5) which is constrained to the anchoring organ (1) by means (7) activatable externally of the means for gripping the anchoring organ (1), which means (7) enable movement of the deformable ring (4) from at least an inactive first position, in which the deformable ring (4) is not coupled or is coupled but only on a small part of the external lateral surface of the short tract of projecting tubular element (12), to an active second position, at which the deformable ring (4) is coupled on a large part of the external lateral surface of the short tract of projecting tubular element (12).

2. The means of claim 1, wherein the means (14) for gripping the anchoring organ (1) enable a gripping of the anchoring organ (1) in order to move the anchoring organ (1).

3. The means of claim 2, wherein the means (14) for gripping the anchoring organ (1) impart a rotation on the anchoring organ (1) about a rotation axis thereof (x-x) which is median and perpendicular to the active surface (11).

4. The means of claim 2, wherein the means (14) for gripping enable a gripping of the anchoring organ (1) in order to vibrate the anchoring organ (1).

5. The means of claim 1, 3 or 4, wherein before activation thereof the glue (3) exhibits a solid form, and is a hot-melt glue which is activated following subjection thereof to a mechanical action producing heat.

6. The means of claim 1, 3 or 4, wherein before activation thereof the glue (3) exhibits a bi-component form, where two components thereof are separated and contained in blisters which are opened following subjection thereof to the mechanical action.

7. The means of claim 6, wherein before activation thereof the glue (3) is housed internally of a chamber defined by the internal cylindrical surface of the tract of tubular element (12) and by the portion of active surface (11) delimited internally of the tract of tubular element (12).

8. The means of claim 7, wherein the base (10) and the tubular element (12), with the relative external lateral surface, are coaxial to the rotation axis (x-x), to which the deformable ring (4) is coaxially arranged.

9. The means of claim 8, wherein the external lateral surface of the short tract of projecting tubular element (12) is truncoconical.

10. The means of claim 9, wherein the circular crown-shaped hollow seating (20) afforded at the external lateral surface is externally delimited by a lateral truncoconical surface (21).

11. The means of claim 10, wherein the lateral truncoconical surface (21) exhibits approximately a same conical shape as the external lateral surface of the short tract of projecting tubular element (12).

12. The means of claim 11, wherein the short tract of projecting tubular element (12) and the circular crown-shaped hollow seating (20) are of such dimensions as to be freely insertable one in another, and leave, between the external lateral surface of the short tract of projecting tubular element (12) and the lateral truncoconical surface (21), which externally delimits the hollow seating (20) a space for allowing a snug insertion of the deformable ring (4).

13. The means of claim 12, wherein the deformable ring (4) has a tubular cylindrical shape.

14. The means of claim 13, wherein the hollow seating (20) is internally delimited by a portion of lateral surface which is cylindrical and coaxially arranged with respect to the rotation axis (x-x).

15. The means of claim 13, wherein the portion of surface to which the anchoring organ (1) is to be fixed is, at least partly, a portion of rounded surface (2a) which is axialsymmetric with respect to an axis of the lateral surface (21) externally delimiting the hollow seating (20); the base (10) being provided with an active surface (11a) which is geometrically coincidental to and couplable with the portion of rounded surface (2a).

16. The means of claim 15, wherein the means comprise a seal ring (6) housed externally of a base of the deformable ring (4) and in contact with the support (5).

## Patentansprüche

1. Mittel zur stabilen Befestigung von Verankerungsgliedern (1) an Flächen, enthaltend: ein Verankerungsglied (1), versehen mit einer Basis (10), welche auf einer Seite eine aktive Oberfläche (11) zum Verbinden mit einem Abschnitt einer Fläche aufweist, an welcher das Verankerungsglied (1) zu befestigen ist, und welche auf einer anderen Seite mit Mitteln (14) zum Greifen des Verankerungsgliedes (1) versehen ist; die Fläche, an welcher das Verankerungsglied (1) zu befestigen ist; wobei eine bestimmte Menge von Kleber (3) auf die aktive Oberfläche (11, 11a) oder auf den Abschnitt der Fläche, an welchem die aktive Oberfläche (11, 11a) befestigt werden soll, aufgetragen wird; wobei der Kleber (3) nur infolge einer mechanischen Wirkung, welcher er unterzogen wird, aktivierbar ist; **dadurch gekennzeichnet, dass** die Mittel einen verformbaren Ring (4) enthalten, welcher mit einer äusseren seitlichen Oberfläche eines kurzen Abschnittes eines hervorstehenden rohrförmigen Elementes (12) verbunden wird, das fest an der Basis (10) gehalten ist, wobei der verformbare Ring (4) dazu bestimmt ist, sich mit einem vorgegebenen Spiel mit einem entsprechenden hohlen Sitz (20) in der Fläche zu verbinden, an welcher das Verankerungsglied (1) zu befestigen ist, welcher hohle Sitz (20) eine kreis-kronenförmige Ausbildung hat und auf solche Weise gearbeitet ist, dass er passrecht zu der äusseren seitlichen Oberfläche zum Greifen des Verankerungsgliedes (1) ist, aktivierbar von ausserhalb der Mittel; wobei der verformbare Ring (4) an einer Halterung (5) befestigt ist, welche an dem Verankerungsglied (1) durch Mittel (7) gehalten wird, welche Mittel (7) eine Bewegung des verformbaren Ringes (4) ermöglichen, und zwar aus wenigstens einer nicht aktiven ersten Position, in welcher der verformbare Ring (4) nicht oder nur mit einem kleinen Teil der äusseren seitlichen Oberfläche des kurzen Abschnittes des hervorstehenden rohrförmigen Elementes (12) verbunden ist, in eine aktive zweite Position, in welcher der verformbare Ringe (4) mit einem grossen Teil der äusseren seitlichen Oberfläche des kurzen Abschnittes des hervorstehenden rohrförmigen Elementes (12) verbunden ist.

2. Mittel nach Patentanspruch 1, bei welchen die Mittel (14) zum Greifen des Verankerungsgliedes (1) ein Greifen des Verankerungsgliedes (1) ermöglichen, um das Verankerungsglied (1) zu bewegen.

3. Mittel nach Patentanspruch 2, bei welchen die Mittel (14) zum Greifen des Verankerungsgliedes (1) eine Umdrehung auf das Verankerungsglied (1) um dessen Drehachse (x-x) übertragen, welche in der Mittellinie und lotrecht zu der aktiven Oberfläche (11) verläuft.

4. Mittel nach Patentanspruch 1, bei welchen die Mittel (14) zum Greifen ein Greifen des Verankerungsgliedes (1) erlauben, um das Verankerungsglied (1) vibrieren zu lassen.

5. Mittel nach Patentanspruch 1, 3 oder 4, bei welchen der Kleber (3) ein heissschmelzender Kleber ist und vor seiner Aktivierung eine feste Form aufweist, und welcher, nachdem er einer Wärme erzeugenden mechanischen Wirkung unterzogen ist, aktiviert wird.

6. Mittel nach Patentanspruch 1, 3 oder 4, bei welchen der Kleber (3) eine Bi-Komponentenform aufweist, wo zwei Komponenten desselben getrennt und in Blistern enthalten sind, welche infolge der mechanischen Wirkung geöffnet werden.

7. Mittel nach Patentanspruch 6, bei welchen der Kleber (3) vor seiner Aktivierung im Inneren einer Kammer aufgenommen ist, beschrieben durch die interne zylindrische Oberfläche des Abschnittes des rohrförmigen Elementes (12) und durch den Abschnitt der aktiven Oberfläche (11), abgegrenzt innerhalb des Abschnittes des rohrförmigen Elementes (12).

8. Mittel nach Patentanspruch 7, bei welchen die Basis (10) und das rohrförmigen Element (12) mit den entsprechenden äusseren seitlichen Oberfläche koaxial zu der Drehachse (x-x) verlaufen, zu welcher der verformbare Ring (4) koaxial angeordnet ist.

9. Mittel nach Patentanspruch 8, bei welchen die äussere seitliche Oberfläche des kurzen Abschnittes des hervorstehenden rohrförmigen Elementes (12) stumpfkegelförmig ist.

10. Mittel nach Patentanspruch 9, bei welchen der kreis-kronenförmige Sitz (20), aufgewiesen an der äusseren seitlichen Oberfläche, aussen durch eine seitlichen stumpfkegelförmige Oberfläche (21) abgegrenzt ist.

11. Mittel nach Patentanspruch 10, bei welchen die seitliche stumpfkegelförmige Oberfläche (21) annähernd die gleiche konische Form aufweist wie die der äusseren seitlichen Oberfläche des kurzen Abschnittes des hervorstehenden rohrförmigen Elementes (12).

12. Mittel nach Patentanspruch 11, bei welchen der kurze Abschnitt des hervorstehenden rohrförmigen Elementes (12) und der kreis-kronenförmige hohle Sitz (20) von solchen Abmessungen sind, dass sie frei ineinander gesetzt werden können und zwischen der äusseren seitlichen Oberfläche des kurzen Abschnittes des hervorstehenden rohrförmigen Elementes (12) und der seitlichen stumpfkegelförmigen Oberfläche (21), welche aussen den hohlen Sitz (20) abgrenzt, einen Raum lassen, um ein passrechtes Einsetzen des verformbaren Ringes (4) zu erlauben.

13. Mittel nach Patentanspruch 12, bei welchen der verformbare Ring (4) eine rohrförmige zylindrische Form hat.

14. Mittel nach Patentanspruch 13, bei welchen der hohle Sitz (20) innen durch einen Abschnitt der seitlichen Oberfläche abgegrenzt ist, welche zylindrisch und koaxial zu der Drehachse (x-x) angeordnet ist.

15. Mittel nach Patentanspruch 13, bei welchen der Abschnitt der Fläche, an welcher das Verankerungsglied (1) zu befestigen ist, wenigstens zum Teil ein Abschnitt mit gerundeter Oberfläche (2a) ist, axialsymmetrisch im Verhältnis zu einer Achse der seitlichen Oberfläche (21), die aussen den hohlen Sitz (20) abgrenzt; wobei die Basis (10) mit einer aktiven Oberfläche (11a) versehen ist, welche geometrisch mit dem Abschnitt der gerundeten Oberfläche übereinstimmt und mit diesem verbindbar ist.

16. Mittel nach Patentanspruch 15, bei welchen die Mittel einen Dichtungsring (6) enthalten, angeordnet ausserhalb einer Basis des verformbaren Ringes (4) und im Kontakt mit der Halterung (5).

## Revendications

1. Moyens de fixation stable d'organes d'ancrage (1) sur des surfaces, comprenant: un organe d'ancrage (1) pourvu d'une base (10) pourvue sur un de ses côtés d'une surface active (11, 11a) d'accouplement avec une portion de surface sur laquelle l'organe d'ancrage (1) doit être fixé, et pourvue sur un autre de ses côtés de moyens (14) de préhension de l'organe d'ancrage (1); la surface sur laquelle l'organe d'ancrage (1) doit être fixé; une quantité prédéterminée de colle (3) sur la surface active (11, 11a) ou sur la portion de surface sur laquelle la surface active (11, 11a) doit être fixée, la colle (3) étant activable seulement après avoir été soumise à une action mécanique; **caractérisés en ce que** les moyens comprennent un anneau déformable (4) qui s'accouple sur une surface latérale externe d'une courte portion d'élément tubulaire saillant (12) qui est solidaire de la base (10), l'anneau déformable (4) étant destiné à être accouplé, avec un jeu prédéterminé, dans un logement creux (20) correspondant de la surface sur laquelle l'organe d'ancrage (1) doit être fixé, lequel logement creux (20) présente une forme de couronne circulaire et est disposé de manière à présenter une forme complémentaire à celle de la surface latérale externe de la courte portion; l'anneau déformable (4) étant fixé sur un support (5) solidaire de l'organe d'ancrage (1) de part l'action de moyens (7) activables extérieurement aux moyens de préhension de l'organe d'ancrage (1), les quels moyens (7) permettent le mouvement de l'anneau déformable (4) d'au moins une première position inactive, dans laquelle l'anneau déformable (4) n'est pas accouplée ou est accouplée sur seulement une petite partie de la surface latérale externe de la courte portion de l'élément tubulaire saillant (12), à une seconde position active, dans laquelle l'anneau déformable (4) est accouplé sur une grande partie de la surface latérale externe de la courte portion d'élément tubulaire saillant (12).

2. Moyens selon la revendication 1, dans lesquels les moyens (14) de préhension de l'organe de préhension (1) permettent une préhension de l'organe d'ancrage (1) de manière à déplacer ce dernier (1).

3. Moyens selon la revendication 2, dans lesquels les moyens (14) de préhension de l'organe d'ancrage (1) impriment une rotation sur l'organe d'ancrage (1) autour de son axe de rotation (x-x) qui est médian et perpendiculaire à la surface active (11).

4. Moyens selon la revendication 2, dans lesquels les moyens (14) de préhension permettent une préhension de l'organe d'ancrage (1) de manière à faire vibrer ce dernier.

5. Moyens selon la revendication 1, 3 ou 4, dans lesquels, avant son activation, la colle (3) présente une forme solide, et est une colle à fusion à chaud qui est activée en la soumettant à une action mécanique produisant de la chaleur.

6. Moyens selon la revendication 1, 3 ou 4, dans lesquels, avant son activation, la colle (3) présente une forme bi-composant, où ses deux composants sont séparés et contenus dans de petits conteneurs qui sont ouverts en les soumettant à l'action mécanique.

7. Moyens selon la revendication 6, dans lesquels, avant son activation, la colle (3) est logée à l'intérieur d'une chambre définie par la surface cylindrique interne de la portion d'élément tubulaire (12) et par la portion de surface active (11) délimitée à l'intérieur de la portion d'élément tubulaire (12).

8. Moyens selon la revendication 7, dans lesquels la base (10) et l'élément tubulaire (12), avec la relative surface latérale externe, sont coaxiaux à l'axe de rotation (x-x), par rapport auquel l'anneau déformable (4) est disposé coaxialement.

9. Moyens selon la revendication 8, dans lesquels la surface latérale externe de la courte portion d'élément tubulaire saillant (12) présente une forme en tronc de cône.

10. Moyens selon la revendication 9, dans lesquels le logement creux en forme de couronne circulaire (20) présent en correspondance de la surface latérale externe est extérieurement délimité par une surface latérale en tronc de cône (21).

11. Moyens selon la revendication 10, dans lesquels la surface latérale en tronc de cône (21) présente approximativement la même forme conique que la surface latérale externe de la courte portion d'élément tubulaire saillant (12).

12. Moyens selon la revendication 11, dans lesquels la courte portion d'élément tubulaire saillant (12) et le logement creux en forme de couronne circulaire (20) présentent des dimensions telles qu'ils peut être librement insérés l'un dans l'autre, et laisser libre, entre la surface latérale externe de la courte portion d'élément tubulaire saillant (12) et la surface latérale en tronc de cône (21), qui délimite extérieurement le logement creux (20), un espace permettant une insertion parfaite de l'anneau déformable (4).

13. Moyens selon la revendication 12, dans lesquels l'anneau déformable (4) présente une forme cylindrique tubulaire.

14. Moyens selon la revendication 13, dans lesquels le logement creux (20) est délimité intérieurement par une partie de surface latérale cylindrique et disposée coaxialement par rapport à l'axe de rotation (x-x).

15. Moyens selon la revendication 13, dans lesquels la portion de surface sur laquelle l'organe d'ancrage (1) est fixé est, au moins partiellement, une portion de surface arrondie (2a) qui est axialement symétrique par rapport à un axe de la surface latérale (21) délimitant extérieurement le logement creux (20); la base (10) étant pourvue d'une surface active (11a) géométriquement coïncidente et pouvant être accouplée à la portion de surface arrondie (2a).

16. Moyens selon la revendication 15, dans lesquels les moyens comprennent un anneau d'étanchéité (6) logé extérieurement à une base de l'anneau déformable (4) et en contact avec le support (5).
